# EUROPÄISCHE PATENTSCHRIFT

(11) **EP 1 040 982 B1**
(45) Veröffentlichungstag und Bekanntmachung des Hinweises auf die Patenterteilung: **21.01.2004**
(21) Anmeldenummer: 00104474.2
(22) Anmeldetag: 08.03.2000
(51) Int. Cl.: B62D 1/06, B62D 1/16, B60R 16/02

(54) **Lenkrad, insbesondere für Kraftfahrzeug**
Steering wheel, especially for an automotive vehicle
Volant de direction, notamment de véhicule automobile

(30) Priorität: 29.03.1999 DE 19914176
(43) Veröffentlichungstag der Anmeldung: 04.10.2000
(73) Patentinhaber: Delphi Technologies Inc., Troy, MI 48007 (US)
(72) Erfinder: Rudolpf, Gerd, 55429 Aspisheim (DE); Schnell, Klaus, 55435 Gau-Algesheim (DE)
(74) Vertreter: Becker, Bernd, Dipl.-Ing.

(56) Entgegenhaltungen:
- EP-A- 0 525 484
- DE-A- 19 602 060
- DE-A- 19 643 451
- DE-A- 19 649 910
- US-A- 5 294 775

## Beschreibung

Die Erfindung bezieht sich auf ein Lenkrad, insbesondere für ein Kraftfahrzeug, mit einer im Lenkradkranz eingebauten elektrischen Heizung und mit einem zugeordneten Lenkstockschalter mit einer an das Bordnetz angeschlossenen Leiterplatte.

Aus der DE-A-196 02 060 ist ein solches Lenkrad bekannt.

Ein Lenkrad mit einer integrierten Heizung ist aus der EP 0 832 806 A1 bekannt, dessen Lenkradkranz unter seinem Außenbezug aus Kunst- oder Naturleder eine Schicht aus thermoplastischem Kunststoff aufweist, in die ein Heizdraht eingeschmolzen ist.

Zur Verbindung einer Heizung eines Lenkrades mit dem Bordnetz eines Kraftfahrzeuges schlägt die US 5 294 775 vor, einen bereichsweise elektrisch leitenden Klemmring an der Nabe des Lenkrades zu befestigen, von dem Anschlußdrähte zu der Heizung geführt werden. Um eine störungsfreie Drehbewegung des Lenkrades zu ermöglichen, weist der an der Nabe festgelegte Klemmring eine in Richtung der Lenksäule orientierte Nut auf, in die ein entsprechender Steg eines zweiten Klemmringes, der an der Lenksäule festgelegt ist, eingreift. Der zweite Klemmring ist über eine Steckverbindung mit dem Bordnetz verbunden. Die Ansteuerung der Heizung erfolgt über einen einer Speiche des Lenkrades zugeordneten Schalter zum Ein- bzw. Ausschalten der Stromzufuhr und über einen als Bi-Metall ausgeführten Thermostaten, der innerhalb der Heizung angeordnet ist. Die Zuführung der elektrischen Energie zu der Heizung ist äußerst aufwendig gestaltet und beansprucht relativ viel Platz im Bereich unterhalb der Lenkradnabe, wodurch die Installation eines Lenkstockschalters an dieser Stelle nicht möglich ist. Im weiteren bereitet eine optionale Bereitstellung der Heizung in einem serienmäßigen Kraftfahrzeug Schwierigkeiten, da für die elektrische Energiezuführung spezielle konstruktive Maßnahmen erforderlich sind.

Es ist Aufgabe der Erfindung, ein Lenkrad der eingangs genannten Art zu schaffen, dessen im Lenkradkranz installierte elektrische Heizung kostengünstig sowie regelbar an ein Bordnetz angeschlossen werden kann.

Erfindungsgemäß wird die Aufgabe dadurch gelöst, daß die Nabe des Lenkrades einen Schleifring trägt, der mit Kontaktarmen eines am Gehäuse des Lenkstockschalters angeordneten Übertragungsmodules in Wirkverbindung steht, und daß das Übertragunsmodul mit einer integrierten Leistungsregelungseinheit für die Heizung und mit an das Bordnetz angeschlossenen Anschlußkontakten versehen ist.

Zum Anschluß der elektrischen Heizung des Lenkrades an das Bordnetz muß lediglich das Übertragungsmodul in den an einem Mantelrohr eines Kraftfahrzeuges festgelegten Lenkstockschalter eingesetzt werden. Dieses Übertragungsmodul umfaßt alle wesentlichen Bauteile, die sowohl für die elektrische Verbindung der Heizung mit dem Bordnetz als auch zur Leistungsregelung der Heizung benötigt werden. Da der ohnehin vorhandene Lenkstockschalter als Aufnahmeeinrichtung für das Übertragungsmodul dient, ist die Anbindung der Heizung an das Bordnetz mittels des Übertragungsmoduls kostengünstig herstellbar. Serienmäßig ausgestattete Kraftfahrzeuge können auf einfache Weise mit einer regelbaren Heizung für das Lenkrad versehen werden. Die separaten Anschlußkontakte des Übertragungsmoduls erlauben eine eigenständige Stromversorgung der Heizung in nahezu beliebiger Höhe, die mittels im Lenkrad oder Lenkstockschalter vorhandener elektrischer Bauteile nicht möglich ist.

Nach einer Weiterbildung des Erfindungsgedankens ist zur Ist-Temperaturerfassung ein veränderbarer Widerstand in das Lenkrad integriert ist, dessen Änderungen als Signale einer der Leiterplatte des Lenkstockschalters zugeordneten Auswerteelektronik übertragen werden, die diese aufbereitet und an die Leistungsregelungseinheit überträgt, wobei in Abhängigkeit von der Größe der Widerstandsänderung der Heizung elektrische Energie zugeführt wird. Bevorzugt steht der zur Ist-Temperaturerfassung in das Lenkrad integrierte Widerstand über eine Wickelfeder mit der Auswerteelektronik der Leiterplatte des Lenkstockschalters in Verbindung. Zweckmäßigerweise ist der Widerstand als Regel- oder Meßwiderstand ausgebildet. Die Wickelfeder ist ein zur Übertragung eines Hupensignals von einem im Lenkrad integrierten Hupenschalter zu dem Lenkstockschalter vorhandenes Bauteil, dessen Funktion lediglich für die Signalgebung des Widerstandes zu dem Lenkstockschalter erweitert wird. Eine separate Verbindung zwischen dem Widerstand und dem Lenkstockschalter ist somit nicht erforderlich. Ferner ist der in das Lenkrad eingesetzte Regeloder Meßwiderstand ein handelsübliches Bauteil, das kostengünstig erhältlich ist und zuverlässig arbeitet.

Um aufwendig zu montierende Verbindungsleitungen zur Ansteuerung der Leistungsregelungseinheit des Übertragungsmoduls zu vermeiden, erfolgt vorteilhafterweise die Übertragung des Signals von der Auswerteelektronik zu der Leistungsregelungseinheit berührungslos.

Bevorzugt umfaßt die Leiterplatte des Lenkstockschalters eine eine Lichtstrahlung emittierende Leuchtdiode als Sender und die Leistungsregelungseinheit einen Fototransistor oder eine Fotodiode als Empfänger. Um eine exakte Signalgebung zwischen dem Lenkstockschalter und der Leistungsregelungseinheit bereitzustellen, erfolgt zweckmäßigerweise die Auslösung der Lichtstrahlung in Abhängigkeit von der Ist-Temperatur des Lenkrades. Somit ist ein definierter Informationsfluß zwischen dem im Lenkrad integrierten Widerstand und der Leistungsregelungseinheit über die Auswerteelektronik der Leiterplatte des Lenkstockschalters gegeben.

Bei einer Ausgestaltung der Erfindung umfaßt die Leistungsregelungseinheit zur Auswertung der Lichtstrahlung einen mit dem Fototransistor oder der Fotodiode gekoppelten Leistungstransistor. Aufgrund dieser Maßnahme ist der Regelungskreis zwischen der Heizung des Lenkrades und dem Bordnetz geschlossen. Der Leistungs-transistor ermöglicht eine Zufuhr des zur Beheizung des Lenkrades bis zu einer bestimmten Ist-Temperatur benötigten Stromes bzw. die Zufuhr der zur Beheizung des Lenkrades benötigten Leistung von dem Bordnetz.

Nach einer weiteren vorteilhaften Ausgestaltung der Erfindung sind die Leistungsregelungseinheit, die Kontaktarme und die Anschlußkontakte einer gemeinsamen Leiterplatte zugeordnet. Hierdurch werden die Fertigungskosten durch die Bereitstellung einer kompakten Einheit, reduziert.

Um das Übertragungsmodul als eine eigenständige, kompakt aufgebaute sowie robuste Baueinheit zu erhalten ist zweckmäßigerweise die Leiterplatte von einem im wesentlichen U-förmigen Gehäuse mit einem Deckel umgeben, das im Bereich der Anschlußkontakte eine Steckercodierung aufweist, wobei die Kontaktarme auf der den Anschlußkontakten gegenüberliegenden Stirnseite des Gehäuses nach unten ragen.

Um eine einfach zu montierende Verbindung des Übertragungsmoduls mit dem Lenkstockschalter zu erzielen, ist bevorzugt das Gehäuse an den Längsseiten seiner Schenkel im Bereich des Deckels mit nach außen weisenden Stegen versehen, die in korrespondierende Nuten des Lenkstockschalters eingreifen. Hierdurch ist das Übertragungsmodul auf einfache Weise in den Lenkstockschalter einschiebbar, wobei gegebenenfalls mindestens eine Klipsverbindung zwischen dem Übertragungsmodul und dem Lenkstockschalter vorgesehen ist.

Zweckmäßigerweise weist der Deckel im Bereich des Fototransistors eine Öffnung zum Durchtritt der Lichtstrahlung auf, die mit einer entsprechenden Öffnung des Lenkstockschalters korrespondiert, der die Leuchtdiode zugeordnet ist.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

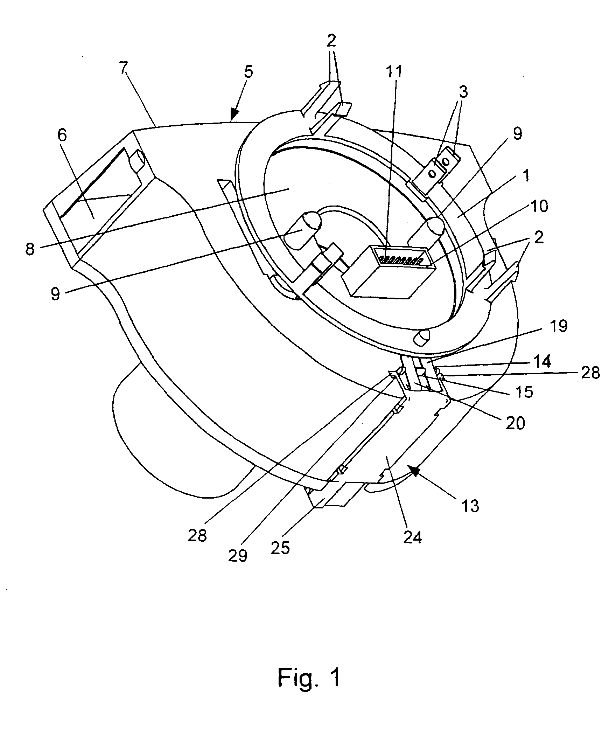

- Fig.1: eine perspektivische Darstellung eines Lenkstockschalters mit einem eingesetzten Übertragungsmodul sowie einem Schleifring für eine Heizung eines erfindungsgemäßen Lenkrades,

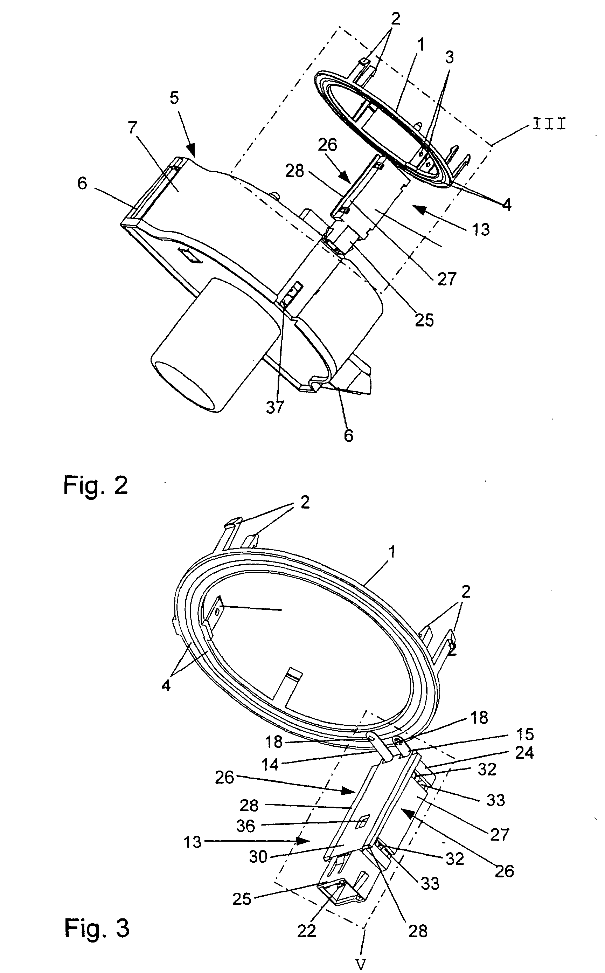

- Fig.2: eine Explosionsdarstellung der Bauteile gemäß Fig. 1,
- Fig.3: eine vergrößerte Darstellung einer Einzelheit III gemäß Fig. 2,

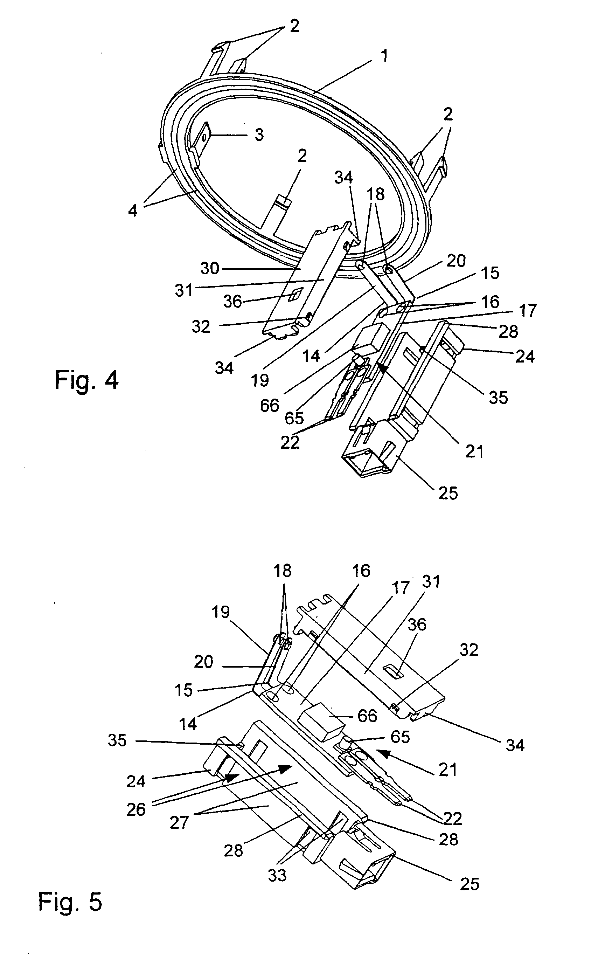

- Fig.4: eine Explosionsdarstellung der Bauteile gemäß Fig. 3,
- Fig.5: eine vergrößerte Explosionsdarstellung einer Einzelheit V gemäß Fig. 3 und
- Fig.6: eine Darstellung eines Schaltplanes für das erfindungsgemäße Lenkrad.

Das Lenkrad umfaßt eine in den Lenkradkranz integrierte elektrische Heizung 12, die mit einem Schleifring 1 in Verbindung steht. Zur Festlegung an dem Lenkrad weist der Schleifring 1 stirnseitige Klipsarme 2 auf. Zur elektrischen Verbindung mit der Heizung sind an dem Schleifring 1 zwei Kontakte 3 angeordnet, die mit Ringkontakten 4 des Schleifrings 1 in Verbindung stehen. Die Ringkontakte 4 sind in die den Klipsarmen 2 entgegengesetzte Stirnseite des Schleifrings 1 eingelassen. Die Kontakte 3 befinden sich auf derselben Stirnseite des Schleifrings 1.

Unterhalb des Schleifringes 1 ist an einem nicht dargestellten Mantelrohr ein Lenkstockschalter 5 befestigt. Der Lenkstockschalter 5 weist seitliche Aufnahmen 6 in einem Gehäuse 7 für einzusetzende Schalthebel auf. Im weiteren ist in das Gehäuse 7 des Lenkstockschalters 5 eine drehbar gelagerte Wickelfeder 8 zur Übertragung von lenkradseitigen Schaltfunktionen integriert. Die Wickelfeder 8 trägt stirnseitig zwei Mitnehmer 9 sowie von einem Kragen 10 umgebene Kontakte 11 für die Schaltfunktionen.

Ferner ist dem Gehäuse 7 des Lenkstockschalters 5 ein Übertragungsmodul 13 für die Heizung 12 zugeordnet. Das Übertragungsmodul 13 ist mit zwei Kontaktarmen 14, 15 versehen, die jeweils mit einem der Ringkontakte 4 des Schleifringes 1 in Wirkverbindung stehen und als Blattfedern ausgebildet sind. Hierzu sind die mit einem Ende 16 auf einer Leiterplatte 17 festgelegten Kontaktarme 14, 15 derart abgewinkelt, daß sie in einen Bereich unterhalb des Schleifringes 1 ragen. Die freien, jeweils einen Kontakt 18 tragenden Schenkel 19, 20 der Kontaktarme 14, 15 sind unterschiedlich lang ausgebildet, so daß der Kontakt 18 des Schenkels 19 des Kontaktarmes 14 auf dem inneren Ringkontakt 4 und der Kontakt 18 des Schenkels 20 des Kontaktarmes 15 auf dem äußeren Ringkontakt 4 des Schleifringes 1 aufliegt.

Die Leiterplatte 17 des Übertragungsmoduls 13 ist weiterhin mit einer Leistungsregelungseinheit 21 für die Heizung 12 versehen und trägt an ihrem den Kontaktarmen 14, 15 entgegengesetzten Ende zwei Anschlußkontakte 22 zur Verbindung mit dem Bordnetz des Kraftfahrzeuges.

Die Leistungsregelungseinheit 21 dient als Schnittstelle sowohl zwischen der Heizung 12 des Lenkrades und dem Bordnetz als auch zwischen einer nicht dargestellten Leiterplatte des Lenkstockschalters 5 und der Heizung 12, wobei die Übertragung eines Signals von der Leiterplatte des Lenkstockschalters 5 zu der Leistungsregelungseinheit 21 mittels Lichtstrahlung 23 berührungslos erfolgt.

Die Leiterplatte 17 des Übertragungsmoduls 13 ist von einem im wesentlichen U-förmigen Gehäuse 24 umgeben, das im Bereich der Anschlußkontakte 22 eine Steckercodierung 25 aufweist und an den Längsseiten 26 seiner Schenkel 27 mit Stegen 28 versehen ist, die in korrespondierende Nuten 29 des Gehäuses 7 des Lenkstockschalters 5 eingreifen. Zwischen die Schenkel 27 des Gehäuses 24 ist ein Deckel 30 eingesetzt, der an längsseitigen Schenkeln 31 Klipsnasen 32 aufweist, die in korrespondierenden Klipsöffnungen 33 des Gehäuses 24 eingreifen. Die Fixierung der Leiterplatte 17 erfolgt zwischen Stegen 34 des Deckels und Stegen 35 des Gehäuses 24 im verklipsten Zustand. Um einen Durchtritt der Lichtstrahlung 23 zu ermöglichen, ist der dem Gehäuse 7 des Lenkstockschalters 5 zugewandte Deckel 30 mit einer Öffnung 36 im Bereich der Leistungsregelungseinheit 21 versehen, die mit einer Öffnung 37 im Gehäuse 7 des Lenkstockschalters 5 deckungsgleich angeordnet ist.

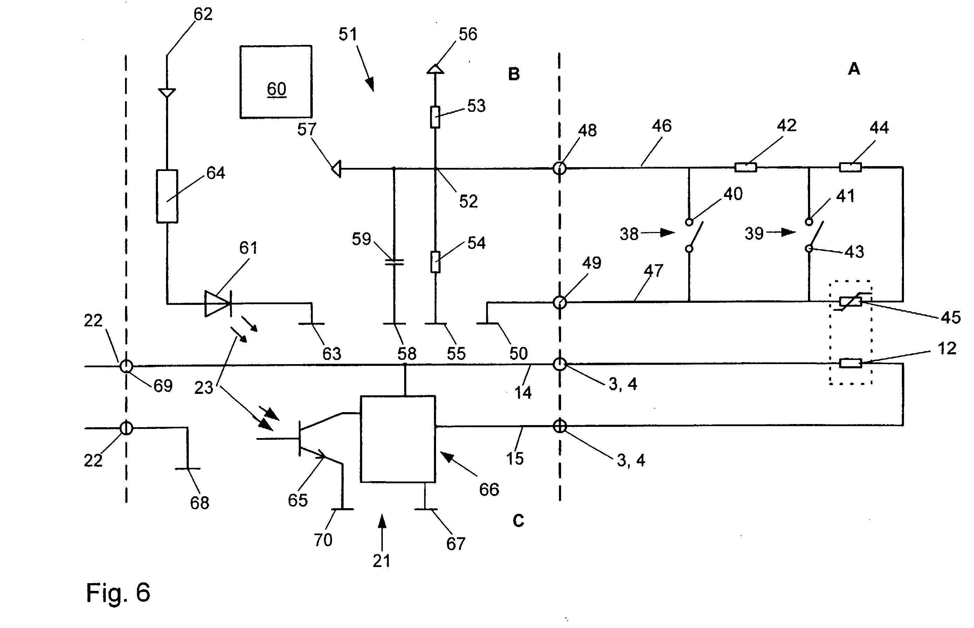

Die Funktionsweise der Signalübertragung wird nachfolgend mittels des Schaltplanes nach Fig. 6 erläutert, wobei der Bereich A Funktionen des Lenkrades, der Bereich B Funktionen des Lenkstockschalters 5 und der Bereich C Funktionen des Übertragungsmoduls repräsentiert.

Dem Lenkrad ist ein Schalter 38 zur Betätigung einer Hupe sowie parallel dazu ein Schalter 39 zur Aktivierung bzw. Deaktivierung der Heizung zugeordnet. Zwischen dem Kontakt 40 des Schalters 38 und dem Kontakt 41 des Schalters 39 ist ein Widerstand 42 geschaltet. Im weiteren Verlauf befinden sich zwischen dem Kontakt 41 und einem Kontakt 43 des Schalters 39 zwei in Reihe geschaltete Widerstände 44, 45, wobei der Widerstand 45 als veränderbarer, temperaturabhängiger Widerstand zur Erfassung der Ist-Temperatur der Heizung 12 ausgebildet ist, die durch einen Widerstand dargestellt ist.

Die Strompfade 46, 47 der Schalter 38, 39 führen zu Kontakten 48, 49 der Wickelfeder 8, wobei der Kontakt 49 in einen Massekontakt 50 mündet. Der Kontakt 48 führt zu einem Spannungsteiler 51 auf der Leiterplatte des Lenkstockschalters 5, an dessen ersten Knoten 52 die Widerstände 53, 54 in Reihe zwischen einem Massekontakt 55 und einem Spannungskontakt 56 angeordnet sind. Im weiteren Verlauf führt der Kontakt 48 zu einem Spannungskontakt 57, wobei zwischen diesen und einen Massekontakt 58 ein Kondensator 59 geschaltet ist.

Der Schalter 38 für die Hupe sowie der Schalter 39 für die Heizung sind im Regelfall geöffnet. Während der kurzzeitigen Betätigung liefert der Schalter 38 ein Massenpotential und der Schalter 39 ein Spannungspotential. Wenn die beiden Schalter 38, 39 geöffnet sind, kann eine Auswerteelektronik 60 oder ein Prozessor der Leiterplatte des Lenkstockschalters 5 den Ist-Wert des temperaturabhängigen Widerstandes 45 auswerten und ein entsprechendes Signal zu einer Leuchtdiode 61 senden, die zwischen einem Spannungskontakt 62 und einem Massekontakt 63 mit einem Widerstand 64 in Reihe geschaltet ist.

Die Auswerteelektronik 60 gibt eine Führungsgröße vor, die mit dem Ist-Wert des Signals des Widerstandes 45, das der Temperatur der Heizung entspricht, verglichen wird. Bei einer Abweichung des Ist-Wertes des Signals des Widerstandes 45 von der Führungsgröße der Auswerteelektronik 60 sendet die Leuchtdiode 61 eine entsprechend modulierte Lichtstrahlung 23 zu einem Fototransistor 65, der Bestandteil der Leistungsregelungseinheit 21 des Übertragungsmoduls 13 ist. Der mit einem Massekontakt 70 in Verbindung stehende Fototransistor 65 steuert einen Leistungstransistor 66 an, der ebenfalls Teil der Leistungsregelungseinheit 21 des Übertragungsmoduls 13 ist. Der Leistungstransistor 66 schließt wiederum einen Strompfad zwischen den beiden Massekontakten 67, 68 und dem Spannungskontakt 69, wobei der Massekontakt 68 und der Spannungskontakt 69 durch jeweils einen Anschlußkontakt 22, der in direkter Verbindung zu dem Bordnetz steht, dargestellt sind.

Somit ergibt sich zur Energieversorgung der Heizung 12 ein von dem Lenkstockschalter 5 und der Wickelfeder 8 getrennter Stromkreis. Die Spannung erreicht über den Anschlußkontakt 22, der als Spannungskontakt 69 ausgeführt ist, über den Kontaktarm 14, der einen der Ringkontakte 4 beaufschlagt und den mit dem Ringkontakt 4 gekoppelten Kontakt 3 die Heizung 12.

Von der Heizung 12 wird die Spannung über den zweiten Kontakt 3, der ebenfalls mit dem anderen Ringkontakt 4 gekoppelt ist, über den Kontaktarm 15 zu dem Leistungstransistor 66 der Leistungsregelungseinheit 21 geleitet. Über den Leistungstransistor 66 gelangt die Spannung zu dem Massekontakt 68, der den zweiten Anschlußkontakt 22 darstellt, zum Bordnetz.

Falls der Ist-Wert des Widerstandes 45 an die Führungsgröße angeglichen ist, sendet die Leuchtdiode 61 keine Lichtstrahlung 23 aus und der Leistungstransistor 66 unterbricht den Strompfad zur Heizung 12.

## Patentansprüche

1. Lenkrad, insbesondere für ein Kraftfahrzeug, mit einer im Lenkradkranz eingebauten elektrischen Heizung (12) und mit einem zugeordneten Lenkstockschalter (5) mit einer an das Bordnetz angeschlossenen Leiterplatte, **dadurch gekennzeichnet, daß** die Nabe des Lenkrades einen Schleifring (1) trägt, der mit Kontaktarmen (14, 15) eines am Gehäuse (7) des Lenkstockschalters (5) angeordneten Übertragungsmodules (13) in Wirkverbindung steht, und daß das Übertragungsmodul (13) mit einer integrierten Leistungsregelungseinheit (21) für die Heizung (12) und mit an das Bordnetz angeschlossenen Anschlußkontakten (22) versehen ist.

2. Lenkrad nach Anspruch 1, **dadurch gekennzeichnet, daß** zur Ist-Temperaturerfassung ein veränderbarer Widerstand (45) in das Lenkrad integriert ist, dessen Änderungen als Signale einer der Leiterplatte des Lenkstockschalters (5) zugeordneten Auswerteelektronik (60) übertragen werden, die diese aufbereitet und an die Leistungsregelungseinheit (21) überträgt, wobei in Abhängigkeit von der Größe der Widerstandsänderung der Heizung (12) elektrische Energie zugeführt wird.

3. Lenkrad nach Anspruch 2, **dadurch gekennzeichnet, daß** der zur Ist-Temperaturerfassung in das Lenkrad integrierte Widerstand (45) über eine Wickelfeder (8) mit der Auswerteelektronik (60) der Leiterplatte des Lenkstockschalters (5) in Verbindung steht.

4. Lenkrad nach Anspruch 3, **dadurch gekennzeichnet daß** der Widerstand (45) als Regel- oder Meßwiderstand ausgebildet ist.

5. Lenkrad nach einem der Ansprüche 1 bis 4, **dadurch gekennzeichnet, daß** die Übertragung des Signals von der Auswerteelektronik (60) zu der Leistungsregelungseinheit (21) berührungslos erfolgt.

6. Lenkrad nach Anspruch 5, **dadurch gekennzeichnet, daß** die Leiterplatte des Lenkstockschalters (5) eine eine Lichtstrahlung (23) emittierende Leuchtdiode (61) als Sender und die Leistungsregelungseinheit (21) einen Fototransistor (65) oder eine Fotodiode als Empfänger umfaßt.

7. Lenkrad nach Anspruch 6, **dadurch gekennzeichnet, daß** die Auslösung der Lichtstrahlung (23) in Abhängigkeit von der Ist-Temperatur des Lenkrades erfolgt.

8. Lenkrad nach Anspruch 7, **dadurch gekennzeichnet, daß** die Leistungsregelungseinheit (21) zur Auswertung der Lichtstrahlung (23) einen mit den Fototransistor (65) oder der Fotodiode gekoppelten Leistungstransistor (66) umfaßt.

9. Lenkrad nach einem der Ansprüche 1 bis 8, **dadurch gekennzeichnet, daß** die Leistungsregelungseinheit (21), die Kontaktarme (14, 15) und die Anschlußkontakte (22) einer gemeinsamen Leiterplatte (17) zugeordnet sind.

10. Lenkrad nach Anspruch 9, **dadurch gekennzeichnet, daß** die Leiterplatte (17) von einem im wesentlichen U-förmigen Gehäuse (24) mit einem Deckel (30) umgeben ist, das im Bereich der Anschlußkontakte (22) eine Steckercodierung (25) aufweist, wobei die Kontaktarme (14, 15) auf der den Anschlußkontakten (22) gegenüberliegenden Stirnseite des Gehäuses (24) nach außen ragen.

11. Lenkrad nach Anspruch 10, **dadurch gekennzeichnet, daß** das Gehäuse (24) an den Längsseiten (26) seiner Schenkel (27) im Bereich des Deckels (30) mit nach außen weisenden Stegen (28) versehen ist, die in korrespondierende Nuten (29) des Lenkstockschalters (5) eingreifen.

12. Lenkrad nach Anspruch 11, vorausgesetzt, daß die Merkmale des Ansprunchs 6 Vorhanden sind, **dadurch gekennzeichnet, daß** der Deckel (30) im Bereich des Fototransistors (65) eine Öffnung (36) zum Durchtritt der Lichtstrahlung (23) aufweist, die mit einer entsprechenden Öffnung (37) des Lenkstockschalters (5) korrespondiert, der die Leuchtdiode (61) zugeordnet ist.

## Claims

1. Steering wheel, more especially for an automotive vehicle, having an electrical heater (12) installed in the steering wheel rim, and an associated steering column switch (5) with a printed circuit board communicating with the on-board power supply, **characterised in that** the hub of the steering wheel is provided with a slip ring (1), which is in operative connection with contact arms (14, 15) of a transmission module (13) disposed on the housing (7) of the steering column switch (5), and **in that** the transmission module (13) is provided with an integral power regulating unit (21) for the heater (12) and with connection contacts (22) communicating with the on-board power supply.

2. Steering wheel according to claim 1, **characterised in that** a variable resistor (45) is incorporated in the steering wheel for detecting the actual temperature, the changes in said resistor being transmitted as signals to an electronic evaluation system (60), which is associated with the printed circuit board of the steering column switch (5), said evaluation system processing said signals and transmitting them to the power regulating unit (21), electrical energy being supplied to the heater (12) in dependence on the magnitude of the change in the resistor.

3. Steering wheel according to claim 2, **characterised in that** the resistor (45), which is incorporated in the steering wheel for detecting the actual temperature, communicates with the electronic evaluation system (60) of the printed circuit board of the steering column switch (5) via a helical spring (8).

4. Steering wheel according to claim 3, **characterised in that** the resistor (45) is in the form of a regulating or measuring resistor.

5. Steering wheel according to one of claims 1 to 4, **characterised in that** the signal is transmitted in a contactless manner from the electronic evaluation system (60) to the power regulating unit (21).

6. Steering wheel according to claim 5, **characterised in that** the printed circuit board of the steering column switch (5) includes a light-emitting diode (61). which emits luminous radiation (23) and serves as the transmitter, and the power regulating unit (21) includes a phototransistor (65) or a photodiode as the receiver.

7. Steering wheel according to claim 6, **characterised in that** the triggering of the luminous radiation (23) is effected in dependence on the actual temperature of the steering wheel.

8. Steering wheel according to claim 7, **characterised in that** the power regulating unit (21) includes a power transistor (66), which is connected to the phototransistor (65) or the photodiode, in order to evaluate the luminous radiation (23).

9. Steering wheel according to one of claims 1 to 8, **characterised in that** the power regulating unit (21), the contact arms (14, 15) and the connection contacts (22) are associated with a common printed circuit board (17).

10. Steering wheel according claim 9, **characterised in that** the printed circuit board (17) is surrounded by a substantially U-shaped housing (24), which has a cover (30) and includes a plug-type encoding device (25) in the region of the connection contacts (22), the contact arms (14, 15) protruding outwardly on the end face of the housing (24) situated opposite the connection contacts (22).

11. Steering wheel according to claim 10, **characterised in that**, on the longitudinal sides (26) of its portions (27) in the region of the cover (30), the housing (24) is provided with outwardly pointing webs (28) which engage in corresponding grooves (29) of the steering column switch (5).

12. Steering wheel according to claim 11, provided that the features of claim 6 exist, **characterised in that**, in the region of the phototransistor (65), the cover (30) has an aperture (36) for the luminous radiation (23) to pass therethrough, said aperture corresponding to a corresponding aperture (37) in the steering column switch (5), which aperture has the light-emitting diode (61) associated therewith.

## Revendications

1. Volant de direction, en particulier pour un véhicule, avec un chauffage électrique (12) encastré dans la jante de volant de direction et avec un commutateur de colonne de direction associé (5) avec une plaque de circuit imprimé connectée au réseau de bord, **caractérisé en ce que** le moyeu du volant de direction porte une bague collectrice (1) qui est en liaison active avec des bras de contact (14, 15) d'un module de transmission (13) disposé sur le boîtier (7) du commutateur de colonne de direction (5), et **en ce que** le module de transmission (13) est muni d'une unité intégrée de régulation de puissance (21) pour le chauffage (12) et de contacts de connexion (22) connectés au réseau de bord.

2. Volant de direction selon la revendication 1, **caractérisé en ce que** pour la détection de la température réelle est intégrée, dans le volant de direction, une résistance variable (45) dont les variations sont transmises en tant que signaux à une électronique d'analyse (60) qui est associée à la plaque de circuit imprimé du commutateur de colonne de direction (5) et qui les met en forme et les transmet à l'unité de régulation de puissance (21), de l'énergie électrique étant transmise au chauffage (12) en fonction du niveau de la variation de la résistance.

3. Volant de direction selon la revendication 2, **caractérisé en ce que** la résistance (45) intégrée dans le volant de direction pour la détection de la température réelle est reliée à l'électronique d'analyse (60) de la plaque de circuit imprimé (5) par l'intermédiaire d'un ressort spiral (8).

4. Volant de direction selon la revendication 3, **caractérisé en ce que** la résistance (45) est conformée en résistance réglable ou en résistance de mesure.

5. Volant de direction selon une des revendications 1 à 4, **caractérisé en ce que** la transmission du signal de l'électronique d'analyse (60) à l'unité de régulation de puissance (21) s'effectue sans contact.

6. Volant de direction selon la revendication 5, **caractérisé en ce que** la plaque de circuit imprimé du commutateur de colonne de direction (5) comprend, comme émetteur, une diode électroluminescente (61) émettant un rayonnement lumineux (23), et l'unité de régulation de puissance (21) comprend, comme récepteur, un phototransistor (65) ou une photodiode.

7. Volant de direction selon la revendication 6, **caractérisé en ce que** le déclenchement du rayonnement lumineux (23) s'effectue en fonction de la température réelle du volant de direction.

8. Volant de direction selon la revendication 7, **caractérisé en ce que** l'unité de régulation de puissance (21) comprend, pour l'analyse du rayonnement lumineux (23), un transistor de puissance (66) couplé au phototransistor (65) ou à la photodiode.

9. Volant de direction selon une des revendications 1 à 8, **caractérisé en ce que** l'unité de régulation de puissance (21), les bras de contact (14, 15) et les contacts de connexion (22) sont associés à une plaque de circuit imprimé commune (17).

10. Volant de direction selon la revendication 9, **caractérisé en ce que** la plaque de circuit imprimé (17) est entourée par un boîtier sensiblement en forme de U (24) qui est muni d'un couvercle (30) et qui, dans la zone des contacts de connexion (22), comporte un détrompeur (25), les bras de contact (14, 15) dépassant à l'extérieur sur le côté frontal du boîtier (24) situé à l'opposé des contacts de connexion (22) .

11. Volant de direction selon la revendication 10, **caractérisé en ce que**, sur les grands côtés (26) de ses branches (27), le boîtier (24) est muni, dans la zone du couvercle (30), de barrettes tournées vers l'extérieur (28) qui s'engagent dans des rainures correspondantes (29) du commutateur de colonne de direction (5) .

12. Volant de direction selon la revendication 11, sous réserve que les caractéristiques de la revendication 6 soient présentes, **caractérisé en ce que**, dans la zone du phototransistor (65), le couvercle (30) est pourvu, pour le passage du rayonnement lumineux (23), d'une ouverture (36) qui coïncide avec une ouverture correspondante (37) du commutateur de colonne de direction (5), à laquelle est associée la diode électroluminescente (61).
